(19) Europäisches Patentamt
European Patent Office
Office européen des brevets

(11) EP 0 767 213 B1

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.$^7$: **C08L 51/04**, C08L 25/08, C08L 53/02

(21) Anmeldenummer: **96115279.0**

(22) Anmeldetag: **24.09.1996**

(54) **Thermoplastische Formmassen**

Thermoplastic mouldings

Masses à mouler thermoplastiques

(84) Benannte Vertragsstaaten:
**BE DE ES FR GB IT NL**

(30) Priorität: **02.10.1995 DE 19536813**

(43) Veröffentlichungstag der Anmeldung:
**09.04.1997 Patentblatt 1997/15**

(73) Patentinhaber: **BASF AKTIENGESELLSCHAFT**
**67056 Ludwigshafen (DE)**

(72) Erfinder:
- **Güntherberg, Norbert, Dr.**
  **67346 Speyer (DE)**
- **Knoll, Konrad, Dr.**
  **67069 Ludwigshafen (DE)**
- **Weber, Martin, Dr.**
  **67433 Neustadt (DE)**

(56) Entgegenhaltungen:
**EP-A- 0 708 145** **DE-A- 4 242 485**
**US-A- 3 907 930**

- **PATENT ABSTRACTS OF JAPAN vol. 095, no. 006, 31. Juli 1995 & JP 07 082387 A (ASAHI CHEM IND CO LTD), 28. März 1995**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 767 213 B1

## Beschreibung

Die vorliegende Erfindung betrifft thermoplastische Formmassen aus

A) 30 bis 98 Gew.-% eines Pfropfpolymerisates aus

$a_K$) 30 bis 90 Gew.-% eines kautschukelastischen Pfropfkerns, erhältlich durch Copolymerisation von

$a_K$/1) 80 bis 99,99 Gew.-% eines oder mehrerer ($C_1$-$C_{10}$-Alkyl)ester der Acrylsäure,

$a_K$/2) 0,01 bis 20 Gew.-% eines vernetzenden Monomeren, und

$a_K$/3) 0 bis 40 Gew.-% von einem oder mehreren weiteren Monomeren,

$a_S$) 10 bis 70 Gew.-% einer Pfropfschale aus

$a_S$/1) 50 bis 100 Gew.-% einer Styrolverbindung der allgemeinen Formel

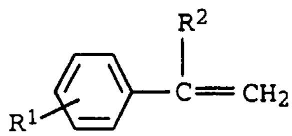

in der $R^1$ und $R^2$ für Wasserstoff oder $C_1$-$C_8$-Alkyl stehen, und/oder eines ($C_1$-$C_8$-Alkyl)esters der Acrylsäure oder Methacrylsäure, und

$a_S$/2) 0 bis 50 Gew.-% von einem oder mehreren weiteren Monomeren,

B) 1 bis 50 Gew.-% eines thermoplastischen Polymerisates aus

$b_1$) 50 bis 100 Gew.-% Styrol und/oder $\alpha$-Methylstyrol,

$b_2$) 0 bis 50 Gew.-% Acrylnitril, und

$b_3$) 0 bis 50 Gew.-% von einem oder mehreren weiteren Monomeren,

C) 1 bis 70 Gew.-% eines kautschukelastisches Blockcopolymerisates aus mindestens einem einpolymerisierte Einheiten eines vinylaromatischen Monomeren aufweisenden, eine Hartphase bildenden Block A

und/oder eines Dienmonomere aufweisenden, eine erste kautschukelastische (Weich-)Phase bildenden Blocks B

und mindestens einem einpolymerisierte Einheiten sowohl eines vinylaromatischen Monomeren wie eines Diens aufweisenden elastomeren, eine (gegebenenfalls zweite oder weitere) Weichphase bildenden Block B/A,

wobei die Glastemperatur $T_g$ des Blocks A über 25°C und die des Blocks B/A unter 25°C liegt und das Phasenvolumen-Verhältnis von Block A zu Block B/A so gewählt ist, daß der Anteil der Hartphase am gesamten Blockcopolymerisat 1 - 40 Volumen-% und der Gewichtsanteil des Diens weniger als 50 Gew.% beträgt,

und

D) 0 bis 30 Gew.-% eines Polymeren sternförmiger Struktur, erhalten durch Verknüpfung mehrerer Blockcopolymerketten aus

$d_1$) 30 bis 90 Gew.-% Styrol und/oder $\alpha$-Methylstyrol, und

$d_2$) 10 bis 70 Gew.-% Butadien und/oder Isopren

über polyfunktionelle Moleküle.

Des weiteren betrifft die Erfindung solche Formmassen, in denen die Komponente C eine spezielle Zusammensetzung aufweist, die Verwendung dieser Formmassen zur Herstellung von Folien und Formkörpern sowie Folien und Formkörper aus diesen Formmassen.

Bevorzugte Ausführungsformen der Erfindung finden sich in den abhängigen Ansprüchen.

Kunststoffolien haben vielfältige Einsatzgebiete. Bestimmte Folien, insbesondere flexible Folien mit lederartigem Aussehen, werden in großem Umfang bei der Innenraumgestaltung, beispielsweise von Kraftwagen, oder als Ledersatz verwendet. Sie werden meist durch Kalandrieren oder Extrusion hergestellt.

Hauptbestandteil dieser Folien ist derzeit zumeist Polyvinylchlorid (PVC), welches Weichmacher und häufig auch noch andere Vinylpolymerisate enthält. Die Folien sind jedoch nur bedingt alterungsstabil, und außerdem können die mitverwendeten Weichmacher im Laufe der Zeit ausschwitzen.

Aus der EP-A 526 813 sind thermoplastische Formmassen aus einem hochvernetzten Acrylatkautschuk mit einer Pfropfhülle aus Methylmethacrylat oder Styrol/Acrylnitril, einem teilvernetzten Acrylatkautschuk, einem Ethylen/Vinylacetat-Copolymerisat sowie gegebenenfalls einem weiteren Polymerisat auf Basis von Styrol und/oder Acrylverbindungen bekannt. Unter den Bedingungen der Formgebung, beispielsweise zu Folien, neigen diese Massen jedoch zu unerwünschten Abbaureaktionen.

In der DE-A 42 11 412 werden als Folienmaterial Mischungen aus Styrol/Acrylnitril-Polymerisaten und Thermoplasten empfohlen, die eine Pfropfhülle aus einem elastomeren Polymerisat haben. Die Herstellung derartiger Pfropfpolymerisate ist jedoch verfahrenstechnisch aufwendig, so daß es schwierig ist, gleichbleibende Produktqualitäten zu erhalten.

Der Erfindung lagen thermoplastische Formmassen als Aufgabe zugrunde, die leicht in gleichbleibender Qualität herstellbar und ohne Qualitätsverlust, beispielsweise durch Abbaureaktionen, zu Formkörpern, speziell zu Folien, weiterverarbeitbar sind.

Demgemäß wurden die eingangs definierten thermoplastischen Formmassen gefunden.

Weiterhin wurden Formmassen mit speziellen Ausführungsformen der Komponente C) gefunden. Außerdem wurde die Verwendung der Polymermischung zur Herstellung von Folien und Formkörpern gefunden sowie Folien und Formkörper aus diesen Massen.

Die Komponente A) ist in den erfindungsgemäßen Formmassen, bezogen auf die Summe der Komponenten A), B), C), und gegebenenfalls D) mit einem Anteil von 30 bis 98, bevorzugt 40 bis 90 und besonders bevorzugt 50 bis 82 Gew.-% enthalten. Bei dieser Komponente handelt es sich um ein partikelförmiges Pfropfcopolymerisat, das aus einem kautschukelastischen Pfropfkern $a_K$) ("Weichkomponente") und einer darauf gepfropften Schale $a_s$) ("Hartkomponente") aufgebaut ist.

Der Pfropfkern $a_K$) ist mit einem Anteil von 30 bis 90, bevorzugt 40 bis 80 und insbesondere 50 bis 75 Gew.-%, bezogen auf die Komponente A), enthalten.

Man erhält den Pfropfkern $a_K$) durch Polymerisation eines Monomerengemisches aus, bezogen auf $a_K$)

$a_K$/1) 80 bis 99,99, bevorzugt 85 bis 99,5 und besonders bevorzugt 90 bis 99 Gew.-% eines oder mehrerer ($C_1$-$C_{10}$-Alkyl)ester der Acrylsäure,

$a_K$/2) 0,01 bis 20, bevorzugt 0,5 bis 10 und besonders bevorzugt 1 bis 5 Gew.-% eines vernetzenden Monomeren, und

$a_K$/3) 0 bis 20, bevorzugt 0 bis 5 Gew.-% von einem oder mehreren weiteren Monomeren.

Als Acrylsäurealkylester (Alkylacrylate) $a_K$/1) eignen sich vor allem solche, die sich vom Ethanol, vom 2-Ethylhexanol und besonders vom n-Butanol ableiten. Es kann ein Acrylsäurealkylester alleine, oder auch eine Mischung mehrerer Alkylacrylate mit unterschiedlichen Alkylresten, verwendet werden.

Vernetzende Monomere $a_K$/2) sind bi- oder polyfunktionelle Comonomere, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols der nachstehenden Formel

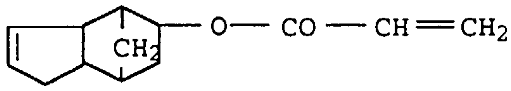

der unter dem Namen Dihydrodicyclopentadienylacrylat bekannt ist, sowie die Allylester der Acrylsäure und der Methacrylsäure.

Der Bestandteil $a_K$) der Formmassen kann außerdem auf Kosten der Monomeren $a_K$/1) und $a_K$/2) weitere Monomere $a_K$/3) enthalten, welche die mechanischen und thermischen Eigenschaften des Kerns in einem gewissen Bereich variieren. Als Beispiele für solche monoethylenisch ungesättigten Comonomere seien genannt:

vinylaromatische Monomere wie Styrol, Styrolderivate der allgemeinen Formel I

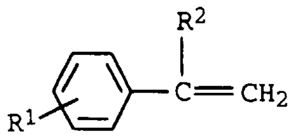

(I);

in der $R^1$ und $R^2$ für Wasserstoff oder $C_1$-$C_8$-Alkyl stehen;

Methacrylnitril, Acrylnitril;

Acrylsäure, Methacrylsäure, weiterhin Dicarbonsäuren wie Maleinsäure und Fumarsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid;

$C_1$-$C_4$-Alkylester der Methacrylsäure wie Methylmethacrylat, Ethylmethacrylat, n-Propylmethacrylat, i-Propylmethacrylat, n-Butylmethacrylat, Isobutylmethacrylat, sek.-Butylmethacrylat, tert.-Butylmethacrylat sowie Hydroxyethylacrylat;

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

ungesättigte Ether wie Vinylmethylether

sowie Mischungen dieser Monomeren.

Die Pfropfschale $a_S$) wird erhalten durch Polymerisation eines Monomerengemisches aus, bezogen auf $a_S$),

$a_S$/1) 50 bis 100, bevorzugt 60 bis 95 und besonders bevorzugt 65 bis 85 Gew.-% einer Styrolverbindung der allgemeinen Formel I

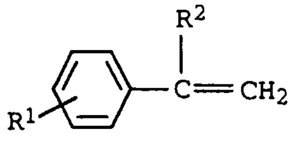

(I)

in der $R^1$ und $R^2$ für Wasserstoff oder $C_1$-$C_8$-Alkyl stehen und/oder eines ($C_1$-$C_8$-Alkyl)esters der Acrylsäure oder Methacrylsäure

$a_S/2)$ 0 bis 50, vorzugsweise 15 bis 35 Gew.-% von einem oder mehreren weiteren Monomeren.

Als Styrolverbindung der allgemeinen Formel (I) (Komponente as/1)) setzt man vorzugsweise Styrol, α-Methylstyrol sowie außerdem mit $C_1$-$C_8$-Alkyl kernalkylierte Styrole wie p-Methylstyrol oder tert.-Butylstyrol, ein. Styrol ist besonders bevorzugt.

Anstelle der Styrolverbindungen oder in Mischung mit ihnen kommen $C_1$- bis $C_8$-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol und 2-Ethylhexanol und vor allem vom n-Butanol ableiten. Besonders bevorzugt ist Methylmethacrylat.

Weiterhin kann die Schale $a_S)$ auf Kosten der Monomeren $a_S/1)$ aus weiteren Comonomeren $a_S/2)$ aufgebaut sein. Für die Komponente $a_S/2)$ gelten die gleichen Empfehlungen wie für die Komponente $a_K/3)$, wobei Maleinsäureanhydrid sowie N-substituierte Maleinimide wie N-Methyl-, N-Phenyl- und N-Cyclohexylmaleinimid als weitere Monomere genannt seien. Diese sowie insbesondere Acrylnitril werden bevorzugt verwendet.

Vorzugsweise ist die Pfropfhülle $a_S)$ aus Styrol oder Methylmethacrylat aufgebaut, oder aus einer Mischung aus 40 bis 90 Gew.-% Methylmethacrylat und dem Rest Acrylnitril oder einer Mischung aus 65 bis 85 Gew.-% Styrol und dem Rest Acrylnitril.

Die Pfropfpolymerisate A) sind in an sich bekannter Weise erhältlich, vorzugsweise durch Emulsionspolymerisation bei 30 bis 80°C. Hierfür eignen sich als Emulgatoren beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze von Alkylsulfonaten oder Fettsäuren mit 10 bis 18 Kohlenstoffatomen.

Vorzugsweise verwendet man zur Herstellung der Dispersion soviel Wasser, daß die fertige Dispersion einen Feststoffgehalt von 20 bis 50 Gew.-% hat.

Als Polymerisationsinitiatoren kommen vorzugsweise Radikalbildner, beispielsweise Peroxide wie bevorzugt Peroxosulfate und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden. Ferner kann man Molekulargewichtsregler wie z.B. Ethylhexylthioglycolat, t-Dodecylmercaptan, Terpinole und dimeres α-Methylstyrol mitverwenden.

Zur Einhaltung eines konstant bleibenden pH-Wertes, der vorzugsweise bei 6 bis 9 liegt, kann man Puffersubstanzen wie $Na_2HPO_4/NaH_2PO_4$ oder Natriumhydrogencarbonat mitverwenden.

Emulgatoren, Initiatoren, Regler und Puffersubstanzen werden in den üblichen Mengen eingesetzt, so daß sich nähere Angaben hierzu erübrigen.

Man kann den Pfropfkern besonders bevorzugt auch durch Polymerisation der Monomeren $a_K)$ in Gegenwart eines feinteiligen Kautschuklatex herstellen (sog. "Saatlatex-Fahrweise" der Polymerisation).

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Auch die Mikrosuspensionspolymerisation ist geeignet, wobei bevorzugt öllösliche Initiatoren wie Lauroylperoxid und t-Butylperpivalat verwendet werden. Die Verfahren hierfür sind bekannt.

Vorzugsweise stimmt man die Reaktionsbedingungen in an sich bekannter Weise so aufeinander ab, daß die Polymerisat-Teilchen einen möglichst einheitlichen Durchmesser $d_{50}$ im Bereich von 60 bis 1500, besonders von 150 bis 1000 nm haben. Anstelle eines einheitlichen Pfropfpolymerisates A) kann man zur Herstellung der erfindungsgemäßen thermoplastischen Massen auch verschiedene dieser Polymerisate verwenden, vor allem solche mit deutlich unterschiedlicher Teilchengröße. Derartige Mischungen mit bimodaler Größenverteilung bieten verfahrenstechnische Vorteile bei der Weiterverarbeitung. Geeignete Teilchendurchmesser liegen im Bereich von 60 bis 200 nm einerseits und 300 bis 1000 nm andererseits.

Weiterhin eignen sich auch Pfropfpolymerisate mit mehreren "weichen" und "harten" Schalen, z.B. des Aufbaus $a_K)$-$a_S)$-$a_K)$-$a_S)$ oder $a_S)$-$a_K)$-$a_S)$, vor allem im Falle größerer Teilchen.

Soweit bei der Pfropfung nicht gepfropfte Polymere aus den Monomeren $a_S)$ entstehen, werden diese Mengen, die in der Regel unter 10 Gew.-% von $a_S)$ liegen, der Masse der Komponente A) zugeordnet.

Die Komponente B) der erfindungsgemäßen Formmasse ist mit einem Anteil von 1 bis 50, bevorzugt 5 bis 40 und besonders bevorzugt 10 bis 30 Gew.-%, bezogen auf die Summe der Komponenten A), B), C) und gegebenenfalls D), enthalten. Der Bestandteil B) ist ein thermoplastisches Polymerisat, das aus

$b_1)$ 50 bis 100, bevorzugt 55 bis 95 und besonders bevorzugt 60 bis 85 Gew.-% Styrol oder α-Methylstyrol,

$b_2)$ 0 bis 50, bevorzugt 5 bis 45 und besonders bevorzugt 15 bis 40 Gew.-% Acrylnitril, sowie

$b_3)$ 0 bis 50, bevorzugt 0 bis 40 Gew.-% von einem oder mehreren weiteren Monomeren,

jeweils bezogen auf die Komponente B), besteht. Als Monomere $b_3$) kommen diejenigen in Betracht, die für die Komponente $a_K$/3) und $a_S$/2) genannt wurden.

Die Polymeren B), die wegen ihrer Hauptkomponenten Styrol und Acrylnitril allgemein auch als SAN-Polymere bezeichnet werden, sind bekannt und z.T. auch handelsüblich. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 200000. Man erhält sie in bekannter Weise durch Substanz-, Lösungs-, Suspensions-, Fällungs- oder Emulsionspolymerisation. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Das Polymere B) kann auch eine Mischung verschiedener Copolymere von Styrol bzw. α-Methylstyrol und Acrylnitril sein, die sich beispielsweise im Gehalt an Acylnitril, oder in der mittleren Molmasse, unterscheiden.

Der Anteil der Komponente C) an den Formmassen beträgt, bezogen auf die Summe der Komponenten A), B), C) und gegebenenfalls D), 1 bis 70, bevorzugt 5 bis 50 und besonders bevorzugt 8 bis 40 Gew.-%. Komponente C) ist ein kautschukelastisches Blockcopolymerisat aus

- mindestens einem Block A, der einpolymerisierte Einheiten eines vinylaromatischen Monomeren aufweist und eine sogenannte "Hartphase" bildet, und/oder
- einem Block B, der einpolymerisierte Dienmonomere aufweist, und eine (erste) kautschukelastische (Weich-)Phase bildet, und
- mindestens einem Block B/A, der einpolymerisierte Einheiten eines vinylaromatischen Monomeren sowie eines Diens aufweist und eine sogenannte "Weichphase" bildet,

wobei die Glastemperatur $T_g$ des Blocks A über 25°C und die des Blocks B/A unter 25°C liegt und das Phasenvolumen-Verhältnis von Block A zu Block B/A so gewählt ist, daß der Anteil der Hartphase am gesamten Blockcopolymerisat 1 - 40 Gew.-% und der Gewichtsanteil des Diens weniger als 50 Gew.-% beträgt.

Detaillierte Angaben zu Aufbau und Herstellung der Komponente C) finden sich nachfolgend, und weiterhin in der DE-OS 44 20 952, auf die hier ausdrücklich verwiesen wird.

Die Weichphase (Block B/A) wird durch statistische Copolymerisation von vinylaromatischen Monomeren und Dienen in Gegenwart eines polaren Cosolvens erhalten.

Ein Blockcopolymerisat C) kann z.B. durch eine der allgemeinen Formeln 1 bis 11 dargestellt werden:

(1) $(A\text{-}B/A)_n$;

(2) $(A\text{-}B/A)_n\text{-}A$,

bevorzugt

A-B/A-A;

(3) $B/A\text{-}(A\text{-}B/A)_n$;

(4) $X\text{-}[(A\text{-}B/A)_n]_{m+1}$;

(5) $X\text{-}[(B/A\text{-}A)_n]_{m+1}$,

bevorzugt

$X\text{-}[\text{-}B/A\text{-}A]_2$;

(6) $X\text{-}[(A\text{-}B/A)_n\text{-}A]_{m+1}$;

(7) $X\text{-}[(B/A\text{-}A)_n\text{-}B/A]_{m+1}$;

(8) $Y\text{-}[(A\text{-}B/A)_n]_{m+1}$;

(9) $Y\text{-}[(B/A\text{-}A)_n]_{m+1}$;

bevorzugt

$Y\text{-}[\text{-}B/A\text{-}A]_2$;

(10) $Y\text{-}[(A\text{-}B/A)_n\text{-}A]_{m+1}$;

(11) $Y\text{-}[(B/A\text{-}A)_n\text{-}B/A]_{m+1}$;

wobei A für den vinylaromatischen Block und B/A für die Weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

Besonders bevorzugt ist ein Blockcopolymerisat, dessen Weichphase unterteilt ist in Blöcke

(12) $(B/A)_1\text{-}(B/A)_2$;

(13) $(B/A)_1\text{-}(B/A)_2\text{-}(B/A)_1$;

(14) $(B/A)_1\text{-}(B/A)_2\text{-}(B/A)_3$;

deren Vinylaromat/Dien-Verhältnis in den einzelnen Blöcken B/A unterschiedlich ist oder sich innerhalb eines Blocks in den Grenzen $(B/A)_1 \rightarrow (B/A)_3$ kontinuierlich ändert, wobei die Glasübergangstemperatur $T_g$ jedes Teilblocks unter 25°C liegt.

Ein Blockcopolymerisat, das mehrere Blöcke B/A und/oder A mit unterschiedlicher Molmasse je Molekül aufweist, ist ebenfalls bevorzugt.

Ebenso kann an die Stelle eines ausschließlich aus vinylaromatischen Einheiten aufgebauten Blocks A ein Block B treten, da es insgesamt lediglich darauf ankommt, daß ein kautschukelastisches Blockcopolymerisat gebildet wird. Solche Copolymerisate können z.B. die Struktur (15) bis (18) haben

(15) B-(B/A)

(16) (B/A)-B-(B/A)

(17) $(B/A)_1\text{-}B\text{-}(B/A)_2$

(18) $B\text{-}(B/A)_1\text{-}(B/A)_2$.

Bevorzugt als vinylaromatische Verbindung im Sinne der Erfindung ist Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination.

Der B/A-Block wird aus etwa 75 - 30 Gew.-% Styrol und 25 - 70 Gew.-% Butadien aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/ Butadien bei 15 - 65 Gew.-%, derjenige der vinylaromatischen Komponente entsprechend bei 85 - 35 Gew.-%. Besonders bevorzugt sind Butadien-Styrol-Blockcopolymere mit einer Monomerzusammensetzung aus 25 - 60 Gew.% Dien und 75 - 40 Gew.% an vinylaromatischer Verbindung.

Die Blockcopolymeren werden durch anionische Polymerisation in einem unpolaren Lösungsmittel unter Zusatz eines aprotischen, polaren Cosolvens hergestellt. Als Lösungsmittel werden bevorzugt aliphatische Kohlenwasserstoffe wie Cyclohexan oder Methylcyclohexan verwendet. Als Cosolvens werden insbesondere Ether, beispielsweise Tetrahydrofuran und aliphatische Polyether wie Diethylenglykoldimethylether, und tertiäre Amine, z.B. Tributylamin und Pyridin bevorzugt. Das polare Cosolvens wird dem dem unpolaren Lösungsmittel in einer geringen Menge, z.B. von 0.5 - 5 Vol.% zugesetzt. Besonders bevorzugt ist Tetrahydrofuran in einer Menge von 0.1 - 0.3 Vol -%. Erfahrungsgemäß kommt man mit einer Menge von etwa 0.2 Vol.-% in den meisten Fällen aus.

Die anionische Polymerisation wird mittels metallorganischer, insbesondere lithiumorganischer Verbindungen wie Methyllithium, Ethyllithium, Propyllithium, n-Butyllithium, sek. Butyllithium und tert. Butyllithium initiiert. Die metallorganische Verbindung wird als Lösung in einem chemisch indifferenten (inerten) Kohlenwasserstoff in einer Menge von üblicherweise 0,002 bis 5 Mol.-%, bezogen auf die Monomeren, zugesetzt.

Die Polymerisationstemperatur kann zwischen 0 und 130°C betragen. Bevorzugt wird der Temperaturbereich zwischen 30 und 100°C.

Erfindungsgemäß liegt der Volumenanteil der aus Dien- und vinylaromatischen Sequenzen aufgebauten Weichphase an der Komponente C) bei 60 - 95, bevorzugt bei 70 - 90 und besonders bevorzugt bei 80 - 90 Vol.-%. Die aus den vinylaromatischen Monomeren entstandenen Blöcke A bilden die Hartphase, deren Volumenanteil entsprechend 5 - 40, bevorzugt 10 - 30 und besonders bevorzugt 10 - 20 Vol.-% ausmacht.

Die Weichphase der Komponente C) hat üblicherweise eine Glasübergangstemperatur zwischen -50 und +25°C, bevorzugt -50 bis +5°C.

Das Molekulargewicht des Blocks A liegt dabei i.a. bei 1000 bis 200.000, bevorzugt bei 3.000 bis 80.000 [g/ mol]. Innerhalb eines Moleküls können A-Blöcke unterschiedliche Molmasse haben.

Das Molekulargewicht des Blocks B/A liegt üblicherweise bei 2.000 bis 250.000, bevorzugt 5.000 bis 150.000 [g/mol]. Auch Block B/A kann wie Block A innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiel für derartige Verbindungen sind in den US-PS 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Der statistische Block B/A kann selbst wieder in Blöcke B1/A1-B2/A2-B3/A3-... unterteilt sein. Bevorzugt besteht der statistische Block aus 2 bis 15 statistischen Teilblöcken, besonders bevorzugt aus 3 bis 10 Teilblöcken.

Die Polymerisation wird mehrstufig durchgeführt und bei monofunktioneller Initiierung z.B. mit der Herstellung des Hartblocks A begonnen. Ein Teil der Monomeren wird im Reaktor vorgelegt und die Polymerisation durch Zugabe des Initiators gestartet. Um einen definierten, Kettenaufbau zu erzielen, ist es empfehlenswert, jedoch nicht zwingend, den Prozeß bis zu einem hohen Umsatz (über 99%) zu führen, bevor die zweite Monomerzugabe erfolgt.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Danach sollten Dien und Vinylaromat möglichst gleichzeitig zugegeben werden. Durch das Mengenverhältnis von Dien zu vinylaromatischer Verbindung, die Konzentration und chemische Struktur der Lewis-Base sowie die Temperatur wird der statistische Aufbau und die Zusammensetzung des Blocks B/A bestimmt. Erfindungsgemäß nimmt das Dien relativ zur Gesamtmasse einschließlich vinylaromatischer Verbindung einen Gewichtsanteil von 25% bis 70% ein. Anschließend kann Block A durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der B/ A-Block aufgebaut, gefolgt vom A-Block.

Die weitere Aufarbeitung erfolgt nach den üblichen Verfahren. Es empfiehlt sich, dabei in einem Rührkessel zu arbeiten und mit einem Alkohol wie Isopropanol die Polymerisation abzubrechen, vor der weiteren Aufarbeitung in üblicher Weise mit $CO_2$/Wasser schwach sauer zu stellen, das Polymer mit einem Oxidationsinhibitor und einem Radikalfänger (handelsübliche Produkte wie Trisnonylphenylphosphit (TNPP) oder α-Tokopherol (Vitamin E) bzw. unter dem Handelsnamen Irganox 1076 oder Irganox 3052 erhältliche Produkte) zu stabilisieren, das Lösungsmittel nach den üblichen Verfahren zu entfernen, zu extrudieren und zu granulieren.

Die Komponente D) der erfindungsgemäßen Formmassen ist mit einem Anteil von 0 bis 30, bevorzugt 0 bis 15 und besonders 1 bis 10 Gew.-%, auf die Summe der Komponenten, enthalten. Der Bestandteil D) ist ein Polymeres sternförmiger Struktur, das durch Verknüpfung mehrerer Polymerketten über oligofunktionelle Moleküle erhalten wird. Die Polymerketten bestehen aus einem Blockcopolymeren, weshalb sie hier als "Blockcopolymer-Ketten" bezeichnet werden, das im wesentlichen aus

$d_1$) 30 bis 90 Gew.-% Styrol und/oder α-Methylstyrol, und
$d_2$) 10 bis 70 Gew.-% Butadien und/oder Isopren

aufgebaut ist.

Vorzugsweise stellt man die Blockcopolymer-Ketten nach der Methode der anionischen Polymerisation in Lösung her, wobei als Starter hauptsächlich metallorganische Verbindungen wie sek.-Butyllithium in Betracht kommen. Man erhält Polymerisate, die im wesentliche unverzweigt sind.

In der Regel ist Blockcopolymerisaten der Vorzug zu geben, deren eines Kettenende von einem Block aus Styrol und/oder α-Methylstyrol und deren anderes Kettenende von einem Block aus Butadien und/oder Isopren gebildet wird. Diese Blöcke können von Polymeren mit statistischer Verteilung voneinander getrennt sein, und ferner können die Blöcke auch in untergeordneten Mengen Einheiten des jeweils anderen Monomeren enthalten.

Von den möglichen Blockcopolymeren sind insbesondere Zweiblockcopolymere, also solche des Typs: Block aus Styrol und/oder α-Methylstyrol - Block aus Butadien und/oder Isopren, und Dreiblockcopolymere, also solche des Typs: Block aus Styrol und/oder α-Methylstyrol - Block aus Butadien und/oder Isopren - Block aus Styrol und/oder α-Methylstyrol, bevorzugt.

Besonders bevorzugt sind Gemische von Blockcopolymeren, die sich in ihren Molmassen um 20 000 bis 100 000 Einheiten unterscheiden.

Ein besonders bevorzugtes Blockcopolymeres D) weist eine Struktur: Block aus Styrol - Block aus Styrol und Butadien, dessen Anfang Butadien-reich und dessen Ende Styrol-reich ist - Block aus Styrol auf. Der mittlere Block wird auch als "verschmierter Übergang" von Butadien zu Styrol bezeichnet.

Oligofunktionelle Moleküle, welche zur Verknüpfung der Blockcopolymerketten geeignet sind, sind z.B. Polyepoxide, beispielsweise epoxidiertes Leinsamenöl, Polyisocyanate wie Benzo-1,2,4-triisocyanat, Polyketone wie 1,3,6-Hexantrion und Polyanhydride, außerdem Dicarbonsäureester wie Diethyladipat, sowie Siliciumhalogewie $SiCl_4$, Metallhalogenide wie $TiCl_4$ und Polyvinylaromaten wie Divinylbenzole.

Im Falle der Zweiblockcopolymere weisen nach der Verknüpfung die Blöcke aus Styrol und/oder α-Methylstyrol in der Regel nach außen. Die Verknüpfung erfolgt über "lebende" Kettenenden an Butadienyl-Lithium oder Styryl-Lithium.

Als Lösungsmittel für die Polymerisation eignen sich wasserfreie Flüssigkeiten wie Alkane und cycloaliphatische und aromatische Kohlenwasserstoffe. Bevorzugt wird Cyclohexan verwendet.

Vorzugsweise nimmt man die anionische Polymerisation bei -20 bis 150°C vor.

Die Reaktion wird in an sich bekannter Weise durch Zugabe einer polaren Verbindung wie Wasser oder eines Alkohols abgebrochen.

Die Aufarbeitung auf die gewünschten Polymeren, deren Molmasse $M_w$ man vorzugsweise auf 50 000 bis 300 000, besonders 100 000 bis 220 000 einstellt, erfolgt wie üblich.

Näheres über die Herstellung der Polymeren sternförmiger Struktur ist der DE-OS 26 10 068 zu entnehmen.

Die Komponente D) kann neben den sternförmigen Polymeren auch lineare Blockcopolymere ohne Sternstruktur enthalten. Diese linearen Blockcopolymere enthalten in der Regel 3 bis 8 Blöcke und können unscharfe ("verschmierte") Blockübergänge aufweisen.

Die beschriebenen sternförmigen und linearen Blockcopolymere sind Handelsprodukte und beispielsweise unter den Namen Finaclear® (Fina Chemicals), K-Resin® (Phillips Petroleum), Clearen® (Denka) und Styrolux® (BASF) erhältlich.

Außer den Komponenten A), B), C) und D) können die thermoplastischen Formmassen noch Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen enthalten. Besonders im Falle der Herstellung von Folien aus den erfindungsgemäßen Formmassen verwendet man Weichmacher mit, beispielsweise Copolymere einer mittleren Molmasse von 2000 bis 8000 aus 30 bis 70 Gew.-% Ethylenoxid und 70 bis 30 Gew.-% 1,2-Propylenoxid in Mengen von 0,5 bis 10 Gew.-%, bezogen auf die Summe der Komponenten A), B), C) und gegebenenfalls D).

Die Herstellung der erfindungsgemäßen Formmassen kann nach an sich bekannten Mischverfahren erfolgen,

beispielsweise unter Aufschmelzen in einem Extruder, Banbury-Mischer, Kneter, Walzenstuhl oder Kalander. Die Komponenten können jedoch auch ohne Schmelzen "kalt" vermischt werden und das pulvrige oder aus Granulaten bestehende Gemisch wird erst bei der Verarbeitung aufgeschmolzen und homogenisiert.

Aus den Formmassen lassen sich Formkörper aller Art, insbesondere Folien, herstellen. Die Herstellung der Folien kann durch Extrudieren, Walzen, Kalandrieren und andere dem Fachmann bekannte Verfahren erfolgen. Die erfindungsgemäßen Formmassen werden dabei durch Erwärmen und/oder Friktion allein oder unter Mitverwendung von weichmachenden oder anderen Zusatzstoffen zu einer verarbeitungsfähigen Folie geformt. Die Verarbeitung derartiger Folien zu Fertigprodukten erfolgt beispielsweise durch Warmformen oder Tiefziehen.

Die Folien haben vielfältige Verwendungsmöglichkeiten, insbesondere in der Automobilindustrie zur Gestaltung des Autoinnenraumes, für Dekorationszwecke, als Lederersatz bei der Herstellung von Koffern und Taschen und in der Möbelindustrie als Überzugsmaterial zur Kaschierung von Möbeloberflächen.

Die erfindungsgemäßen thermoplastischen Formmassen enthalten kein Halogen. Sie sind weitestgehend frei von ausdünstenden oder ausschwitzenden Bestandteilen und zeigen bei der Verarbeitung praktisch keine nachteiligen Veränderungen durch Abbaureaktionen, wie etwa Verfärbungen. Weiterhin weisen sie gute mechanische Eigenschaften auf.

Beispiele

Es wurden folgende Bestandteile hergestellt (alle %-Angaben sind Gew.-%)

Herstellung einer Komponente A:

Partikelförmiges Pfropfpolymerisat aus vernetztem Poly-n-Butylacrylat (Kern) und Styrol/Acrylnitril-Copolymer (Schale)

Zu einer Mischung aus 3 g eines Polybutylacrylat-Saatlatex, 100 g Wasser und 0,2 g Kaliumpersulfat wurden im Verlauf von 4 Stunden bei 60°C eine Mischung aus 98 g n-Butylacrylat und 2 g Dihydrodicyclopentadienylacrylat sowie getrennt davon eine Lösung von 1 g Na-$C_{12}$-$C_{18}$-Paraffinsulfonat in 50 g Wasser gegeben. Die Polymerisation wurde danach noch für 3 Stunden fortgesetzt. Der mittlere Teilchendurchmesser $d_{50}$ des entstandenen Latex betrug 430 nm bei enger Verteilung der Teilchengröße (Q = 0,1).

150 g dieses Latex wurden mit 60 g Wasser, 0,03 g Kaliumpersulfat und 0,05 g Lauroylperoxid vermischt, wonach auf die Latexteilchen im Laufe von 3 Stunden bei 65°C zunächst 20 g Styrol und danach im Laufe von weiteren 4 Stunden ein Gemisch aus 15 g Styrol und 5 g Acrylnitril aufgepfropft wurden. Anschließend wurde das Polymerisat mit einer Calciumchloridlösung bei 95°C ausgefällt, abgetrennt, mit Wasser gewaschen und im warmen Luftstrom getrocknet. Der Pfropfgrad des Polymerisates betrug 35 % und die Teilchen hatten einen mittleren Durchmesser $d_{50}$ von 510 nm.

Das Pfropfpolymerisat setzte sich wie folgt zusammen (gerundete Werte):

60 Gew.-% eines Pfropfkerns aus Polybutylacrylat, vernetzt,
20 Gew.-% einer inneren Pfropfstufe aus Styrol-Polymer und
20 Gew.-% einer äußeren Pfropfstufe aus Styrol/Acrylnitril-Copolymer im Gewichtsverhältnis S/AN 3:1.

Das anfangs eingesetzte Saat-Polymere wurde nach dem Verfahren der EP-B 6503 (Spalte 12, Zeile 55, bis Spalte 13, Zeile 22) durch Polymerisation von n-Butylacrylat und Tricyclodecenylacrylat in wäßriger Emulsion hergestellt und hatte einen Feststoffgehalt von 40 %.

Die bei der Beschreibung der Komponente A) erwähnte mittlere Teilchengröße ist das Gewichtsmittel der Teilchengrößen.

Der mittlere Durchmesser entspricht dem $d_{50}$-Wert, demzufolge 50 Gew.-% aller Teilchen einen kleineren und 50 Gew.-% einen größeren Durchmesser haben als derjenige Durchmesser, der dem $d_{50}$-Wert entspricht. Um die Breite der Teilchengrößenverteilung zu charakterisieren, werden zusätzlich zum $d_{50}$-Wert oftmals der $d_{10}$- sowie der $d_{90}$-Wert angegeben. 10 Gew.-% aller Teilchen sind kleiner und 90 Gew.-% größer als der $d_{10}$-Durchmesser. Analog haben 90 Gew.-% aller Teilchen einen kleineren und 10 Gew.-% einen größeren Durchmesser als denjenigen, der dem $d_{90}$-Wert entspricht. Der Quotient $Q = (d_{90}-d_{10})/d_{50}$ ist ein Maß für die Breite der Teilchengrößenverteilung. Je kleiner Q ist, desto enger ist die Verteilung.

Herstellung einer Komponente B:

Copolymerisat aus Styrol und Acrylnitril

Es wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Danmiller, Bd. V "Polystyrol", Carl-Hanser-Verlag München 1969, Seite 122 bis 124, beschrieben ist. Die Viskositätszahl VZ (ermittelt nach DIN 53 726 bei 25°C, 0,5 Gew.-% in Dimethylformamid) betrug 80 ml/g.

Herstellung einer Komponente C:

kautschukelastisches Blockcopolymerisat

Ein simultan heiz- und kühlbarer 50 1-Edelstahlautoklav mit Rührer wurde durch Spülen mit Stickstoff und Auskochen mit einer Lösung von sec.-Butyllithium und 1,1-Diphenylethylen in Cyclohexan und Trocknen vorbereitet. Es wurden 22,8 l Cyclohexan eingefüllt, wonach 42 ml sek.-Butyllithium und 65,8 ml Tetrahydrofuran zugesetzt wurden. In der Tabelle 1 sind die einzelnen Stufen der Polymerisation zusammengefaßt.
In jeder Stufe war die Dauer des Monomerzulaufs klein gegenüber der Dauer der Polymerisation. Durch Heizung bzw. Kühlung des Reaktormantels wurden die angegebenen Anfangs- bzw. Endtemperaturen eingestellt.
Nach Umsetzungsende (Verbrauch der Monomeren) wurde die Polymerisation abgebrochen, indem man mit Ethanol bis zur Farblosigkeit titrierte, und die Mischung mit einem geringen Säureüberschuß angesäuert.
Die Lösung wurde auf einem Entgasungsextruder, welcher mit drei Entgasungsdomen sowie Vorwärts- und Rückwärtsentgasung versehen war, bei 200°C aufgearbeitet. Das auf diese Weise erhaltene Granulat wurde zur Herstellung der Formmasse verwendet.

Tabelle 1

| Stufe | 1 | 2 | 3 | 4 | 5 |
|---|---|---|---|---|---|
| Zulauf Butadien [g] | - | 1120 | 1120 | 1120 | - |
| Zulauf Styrol [g] | 1008 | 1412 | 1412 | 1412 | 1008 |
| $T_{Anfang}$ [°C] | 30 | 77 | 73 | 74 | 74 |
| $T_{Ende}$ [°C] | 77 | 102 | 95 | 88 | 85 |
| Pol. dauer [min] | 12 | 14 | 10 | 26 | 14 |

Das erhaltene Polymere hat folgende mittlere Molmassen (in g/ mol), wie durch Gelpermeationschromatographie (Kalibration gegen Polystyrol) ermittelt wurde: Zahlenmittel $\overline{M}_n$ 119 000, Viskositätsmittel $\overline{M}_v$ 158 000, Gewichtsmittel $\overline{M}_w$ 176 000.
Die Glasübergangstemperaturen $T_g$ wurden mittels DSC bestimmt und betrugen -16°C für die Weichphase und +75°C für die Hartphase. Die Breite der Glasstufe, ein Maß für die Homogenität der Phase, betrug 9°C für die Weichphase und 12°C für die Hartphase.
Der Schmelzvolumenindex MVI wurde bei 200°C und einer Belastung von 5 kg nach DIN 53 735 bestimmt und betrug 8,5 ml/10 min.

Herstellung einer Komponente D)

Blockcopolymeres aus Styrol und Butadien mit sternförmiger Struktur.
In einen 6 l-Druckreaktor, der vorbereitet wurde wie bei der Herstellung der Komponente C) beschrieben, wurden unter Inertgasatmosphäre und Feuchtigkeitsausschluß 2,7 kg Cyclohexan und 525 g Styrol mit sec-Butyl-Lithium austitriert und mit 0,33 g sec-Butyl-Lithium 30 Minuten polymerisiert. Die Temperatur betrug am Anfang 54°C. Zur aktiven Reaktionslösung wurden bei 71°C 0,22 kg Cyclohexan, 0,9 g sec-Butyl-Lithium und 225 g Styrol zugesetzt und eine Stunde polymerisiert, anschließend wurden 10 g Tetrahydrofuran und 250 g Butadien während einer Stunde bei ca. 74°C anpolymerisiert. Zum Schluß wurde mit 10 ml epoxidiertem Leinsamenöl (Epoxyl 9-5) in 150 ml Toluol gekoppelt. Die Viskositätszahl betrug 91,9 $cm^3/g$.
Die Lösung wurde aufgearbeitet wie für Komponente C) beschrieben.

Erfindungsgemäße Massen und ihre Eigenschaften

Aus den Komponenten A, B, C und D wurden Mischungen hergestellt, die bei 200°C auf einem Walzwerk zu Folien von 1 mm Stärke verarbeitet wurden.
Folgende Eigenschaften der Folien wurden ermittelt:

- Zugfestigkeit: Der Zugversuch wurde nach DIN 53 504 an Streifen vorgenommen, die aus der Folie ausgestanzt wurden.
- Reißdehnung: die Dehnung bei Anlegen der Reißkraft wurde nach DIN 53 504 im Zugversuch bestimmt und in % der ursprünglichen Abmessung des Streifens angegeben.
- Weiterreißfestigkeit: es wurde ein Weiterreißversuch nach DIN 43 515 an ausgestanzten Streifen vorgenommen.
- Shore-Härte: es wurde die Shore-Härte nach DIN 43 505 mit dem Prüfgerät D bestimmt.
- Wärmeformbeständigkeit: sie wurde nach DIN 53 460 als Vicat-Zahl mit der Meßmethode A ermittelt.

Die Zusammensetzungen der hergestellten Folien und die Versuchsergebnisse sind in der Tabelle 1 zusammengestellt.

Tabelle 2

| Versuch Nr. | 1 | 2 | 3*) | 4*) |
|---|---|---|---|---|
| Zusammensetzung [Gew.-%]: | | | | |
| Komponente A | 80 | 70 | 80 | - |
| Komponente B | 10 | 10 | - | - |
| Komponente C | 7,2 | 14,4 | 14,4 | 72 |
| Komponente D | 2,8 | 5,6 | 5,6 | 28 |
| Eigenschaften: | | | | |
| Zugfestigkeit [N/mm$^2$] | 15,7 | 17,0 | 17,0 | 28,8 |
| Reißdehnung [%] | 154 | 169 | 255 | 645 |
| Weiterreißfestigkeit [N/mm$^2$] | 46,6 | 43,6 | 34,2 | 49,6 |
| Härte Shore D | 46 | 45 | 41 | 29 |
| Wärmeformbeständigkeit: Vicat A [°C] | 86 | 79 | 68 | **) |

*) zum Vergleich
**) Prüfung unmöglich, da Probekörper zu weich

Folien aus Formmassen, in denen die Komponente B) (Styrol-Acrylnitril-Copolymeres) nicht enthalten ist, weisen zwar eine hohe Reißdehnung auf (Vergleichsversuch Nr. 3*).
Die Weiterreißfestigkeit solcher Folien ist jedoch deutlich geringer als bei Folien aus den erfindungsgemäßen Formmassen (Versuche Nr. 1 und 2).
Folien, deren Formmassen keine Komponente A) (Pfropfpolymeriat, SAN auf Polybutylacrylatkautschuk) und keine Komponente B) enthalten (Vergleichsversuch Nr. 4*), haben eine erheblich geringere Härte (Shore D) als die Folien erfindungsgemäßer Zusammensetzung und sind aufgrund ihrer Weichheit schlecht verarbeitbar.

**Patentansprüche**

**1.** Thermoplastische Formmassen aus

A) 30 bis 98 Gew.-% eines Pfropfpolymerisates aus

$a_K$) 30 bis 90 Gew.-% eines kautschukelastischen Pfropfkerns, erhältlich durch Copolymerisation von

$a_K$/1) 80 bis 99,99 Gew.-% eines oder mehrerer ($C_1$-$C_{10}$-Alkyl)ester der Acrylsäure,

$a_K$/2) 0,01 bis 20 Gew.-% eines vernetzenden Monomeren, und

$a_K$/3) 0 bis 40 Gew.-% von einem oder mehreren weiteren Monomeren,

$a_S$) 10 bis 70 Gew.-% einer Pfropfschale aus

$a_S$/1) 50 bis 100 Gew.-% einer Styrolverbindung der allgemeinen Formel

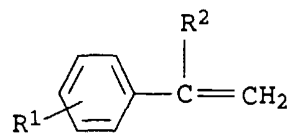

in der $R^1$ und $R^2$ für Wasserstoff oder $C_1$-$C_8$-Alkyl stehen,
und/oder
eines ($C_1$-$C_8$-Alkyl)esters der Acrylsäure oder Methacrylsäure, und

$a_S$/2) 0 bis 50 Gew.-% von einem oder mehreren weiteren Monomeren,

B) 1 bis 50 Gew.-% eines thermoplastischen Polymerisates aus

$b_1$) 50 bis 100 Gew.-% Styrol und/oder $\alpha$-Methylstyrol,

$b_2$) 0 bis 50 Gew.-% Acrylnitril, und

$b_3$) 0 bis 50 Gew.-% von einem weiteren oder mehreren weiteren Monomeren,

C) 1 bis 70 Gew.-% eines kautschukelastischen Blockcopolymerisates aus mindestens einem einpolymerisierte Einheiten eines vinylaromatischen Monomeren aufweisenden, eine Hartphase bildenden Block A

und/oder eines Dienmonomere aufweisenden, eine erste kautschukelastische (Weich-)Phase bildenden Blocks B

und mindestens einem einpolymerisierte Einheiten sowohl eines vinylaromatischen Monomeren wie eines Diens aufweisenden elastomeren, eine (gegebenenfalls zweite oder weitere) Weichphase bildenden Block B/A,

wobei die Glastemperatur $T_g$ des Blocks A über 25°C und die des Blocks B/A unter 25°C liegt und das Phasenvolumen-Verhältnis von Block A zu Block B/A so gewählt ist, daß der Anteil der Hartphase am gesamten Blockcopolymerisat 1 - 40 Volumen-% und der Gewichtsanteil des Diens weniger als 50 Gew. % beträgt,

und

D) 0 bis 30 Gew.-% eines Polymeren sternförmiger Struktur, erhalten durch Verknüpfung mehrerer Blockcopolymerketten aus

$d_1$) 30 bis 90 Gew.-% Styrol und/oder $\alpha$-Methylstyrol, und
$d_2$) 10 bis 70 Gew.-% Butadien und/oder Isopren

über polyfunktionelle Moleküle.

**2.** Thermoplastische Formmassen nach Anspruch 1, in denen im Blockcopolymerisat C) die $T_g$ der Hartphase über 50°C und die $T_g$ der Weichphasen unter 5°C liegt.

**3.** Thermoplastische Formmassen nach Anspruch 1, in denen im Blockcopolymerisat C) das vinylaromatische Monomere ausgewählt ist aus Styrol, α-Methylstyrol und Vinyltoluol und das Dien ausgewählt ist aus Butadien und Isopren.

**4.** Thermoplastische Formmassen nach Anspruch 1, in denen im Blockcopolymerisat C) die (gegebenenfalls zweite bzw. weitere) Weichphase aus einen Copolymerisat eines Vinylaromaten mit einem Dien gebildet wird.

**5.** Thermoplastische Formmassen nach Anspruch 2, in denen die Komponente B ein Copolymerisat aus 75 bis 95 Gew.-% Styrol und 5 bis 25 Gew.-% Acrylnitril ist.

**6.** Thermoplastische Formmassen nach den Ansprüchen 1 bis 5, enthaltend zusätzlich zu den Komponenten A) bis D) 0,5 bis 10 Gew.-% eines Copolymerisates einer mittleren Molmasse von 2000 bis 8000 aus 30 bis 70 Gew.-% Ethylenoxid und 70 bis 30 Gew.-% 1,2-Propylenoxid.

**7.** Verwendung der thermoplastischen Formmassen gemäß den Ansprüchen 1 bis 6 zur Herstellung von Folien und Formkörpern.

**8.** Folien und Formkörper aus den thermoplastischen Formmassen gemäß den Ansprüchen 1 bis 6.

**9.** Verwendung der Folien und Formkörper gemäß Anspruch 8 für den Automobil-Innenausbau.

**Claims**

**1.** A thermoplastic molding material comprising

A) from 30 to 98 % by weight of a graft polymer of

$a_C$) from 30 to 90 % by weight of an elastomeric graft core obtainable by copolymerizing

$a_C/1$) from 80 to 99.99 % by weight of one or more $C_1$-$C_{10}$-alkyl esters of acrylic acid,

$a_C/2$) from 0.01 to 20 % by weight of a crosslinking monomer, and

$a_C/3$) from 0 to 40 % by weight of one or more further monomers, and

$a_S$) from 10 to 70 % by weight of a graft shell of

$a_S/1$) from 50 to 100 % by weight of a styrene compound of the formula

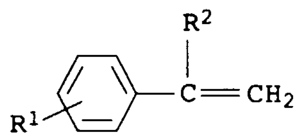

where $R^1$ and $R^2$ are each hydrogen or $C_1$-$C_8$-alkyl,
or
of a $C_1$-$C_8$-alkyl ester of acrylic acid or methacrylic acid, and

$a_S/2$) from 0 to 50 % by weight of one or more further monomers,

B) from 1 to 50 % by weight of a thermoplastic polymer of

$b_1$) from 50 to 100 % by weight of styrene or α-methylstyrene,

$b_2$) from 0 to 50 % by weight of acrylonitrile, and

$b_3$) from 0 to 50 % by weight of one or more further monomers,

C) from 1 to 70 % by weight of an elastomeric block copolymer of at least one block A which has polymerized units of a vinylaromatic monomer and forms a hard phase

or of a block B which has diene monomers and forms a first elastomeric (soft) phase

and at least one elastomeric block B/A which has polymerized units of both a vinylaromatic monomer and a diene and forms a soft phase (if required a second or further soft phase),

the glass transition temperature $T_g$ of block A being above 25°C and that of block B/A being below 25°C and the phase volume ratio of block A to block B/A being chosen so that the proportion of the hard phase in the total block copolymer is 1-40 % by volume and the amount of the diene is less than 50 % by weight,

and

D) from 0 to 30 % by weight of a polymer having a star-like structure, obtained by linking a plurality of block copolymer chains comprising

$d_1$) from 30 to 90 % by weight of styrene or α-methylstyrene, and
$d_2$) from 10 to 70 % by weight of butadiene or isoprene

via polyfunctional molecules.

**2.** A thermoplastic molding material as claimed in claim 1, in which, in block copolymer C) the $T_g$ of the hard phase is above 50°C and the $T_g$ of the soft phases is below 5°C.

**3.** A thermoplastic molding material as claimed in claim 1, in which, in block copolymer C), the vinylaromatic monomer is selected from styrene, α-methylstyrene and vinyltoluene and the diene is selected from butadiene and isoprene.

**4.** A thermoplastic molding material as claimed in claim 1, in which, in block copolymer C), the soft phase (or if required a second or further soft phase) is formed from a copolymer of a vinylaromatic with a diene.

**5.** A thermoplastic molding material as claimed in claim 2, in which component B is a copolymer of from 75 to 95 % by weight of styrene and from 5 to 25 % by weight of acrylonitrile.

**6.** A thermoplastic molding material as claimed in any of claims 1 to 5, containing, in addition to components A) to D), from 0.5 to 10 % by weight of a copolymer having an average molecular weight of from 2000 to 8000 and comprising from 30 to 70 % by weight of ethylene oxide and from 70 to 30 % by weight of 1,2-propylene oxide.

**7.** Use of a thermoplastic molding material as claimed in any of claims 1 to 6 for the production of films and moldings.

**8.** A film or molding comprising a thermoplastic molding material as claimed in any of claims 1 to 6.

**9.** Use of a film or molding as claimed in claim 8 for interior automotive trim.

## Revendications

**1.** Masses à mouler thermoplastiques à base

(A) de 30 à 98% en poids d'un polymère de greffage à base

$a_K$) de 30 à 90% en poids d'un noyau de greffage élastique comme du caoutchouc, que l'on peut obtenir

par copolymérisation

$a_K$/1) de 80 à 99,99% en poids d'un ou plusieurs esters (alkyliques en $C_1$-$C_{10}$) de l'acide acrylique,
$a_K$/2) de 0,01 à 20% en poids d'un monomère réticulant, et
$a_k$/3) de 0 à 40% en poids d'un ou de plusieurs autres monomères,

$a_S$) de 10 à 70% en poids d'une enveloppe de greffage à base

$a_S$/1) de 50 à 100% en poids d'un composé du styrène de la formule générale :

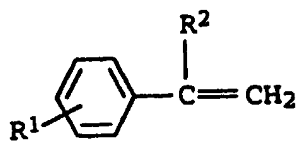

dans laquelle $R^1$ et $R^2$ représentent de l'hydrogène ou de l'alkyle en $C_1$-$C_8$,
et/ou
d'un ester (alkylique en $C_1$-$C_8$) de l'acide acrylique ou de l'acide méthacrylique, et
$a_S$/2) de 0 à 50% en poids d'un ou de plusieurs autres monomères,

B) de 1 à 50% en poids d'un polymère thermoplastique à base

$b_1$) de 50 à 100% en poids de styrène et/ou d'α-méthylstyrène,
$b_2$) de 0 à 50% en poids d'acrylonitrile, et
$b_3$) de 0 à 50% en poids d'un autre monomère ou de plusieurs autres monomères,

C) de 1 à 70% en poids d'un copolymère bloc élastique comme du caoutchouc à base d'au moins un bloc A présentant des unités copolymérisées d'un monomère vinylaromatique et formant une phase dure

et/ou d'un bloc B présentant des monomères diéniques et formant une première phase (molle) élastique comme du caoutchouc,
et d'au moins un bloc B/A élastomère présentant des unités copolymérisées aussi bien d'un monomère vinylaromatique que d'un diène et formant une (éventuellement deuxième ou autre) phase molle,
la température de transition vitreuse $T_g$ du bloc A étant supérieure à 25°C et celle du bloc B/A inférieure à 25°C, le rapport volumique des phases du bloc A et du bloc B/A étant choisi de façon que la fraction de la phase dure par rapport à la totalité du copolymère bloc soit de 1-40% en volume et que la fraction pondérale du diène soit inférieure à 50% en poids,

et

D) de 0 à 30% en poids d'un polymère de structure en étoile, qui est obtenu par liaison de plusieurs chaînes de copolymères blocs à base

$d_1$) de 30 à 90% en poids de styrène et/ou d'α-méthylstyrène, et
$d_2$) de 10 à 70% en poids de butadiène et/ou d'isoprène,

par l'intermédiaire de molécules polyfonctionnelles.

**2.** Masses à mouler thermoplastiques suivant la revendication 1, dans lesquelles la $T_g$ de la phase dure dans le copolymère bloc C) est supérieure à 50°C et la $T_g$ des phases molles inférieure à 5°C.

**3.** Masses à mouler thermoplastiques suivant la revendication 1, dans lesquelles, dans le copolymère bloc C), le monomère vinylaromatique est choisi parmi du styrène, de l'α-méthylstyrène et du vinyltoluène et le diène est choisi parmi du butadiène et de l'isoprène.

**4.** Masses à mouler thermoplastiques suivant la revendication 1, dans lesquelles, dans le copolymère bloc C), la

(éventuellement deuxième ou autre) phase molle est formée d'un produit de copolymérisation d'une substance aromatique vinylique avec un diène.

**5.** Masses à mouler thermoplastiques suivant la revendication 2, dans lesquelles le composant B est un copolymère de 75 à 95% en poids de styrène et de 5 à 25% en poids d'acrylonitrile.

**6.** Masses à mouler thermoplastiques suivant l'une des revendications 1 à 5, contenant en supplément aux composants A) à D), 0,5 à 10% en poids d'un copolymère d'une masse molaire moyenne de 2.000 à 8.000 à base de 30 à 70% en poids d'oxyde d'éthylène et de 70 à 30% en poids d'oxyde de 1,2-propylène.

**7.** Utilisation des masses à mouler thermoplastiques suivant l'une des revendications 1 à 6, pour la fabrication de feuilles et de corps de moulage.

**8.** Feuilles et corps de moulage à base des masses à mouler thermoplastiques suivant l'une des revendications 1 à 6.

**9.** Utilisation des feuilles et corps de moulage suivant la revendication 8, pour l'achèvement intérieur des automobiles.